# EUROPÄISCHE PATENTSCHRIFT

(11) **EP 2 599 381 B1**
(45) Veröffentlichungstag und Bekanntmachung des Hinweises auf die Patenterteilung: **19.10.2016**
(21) Anmeldenummer: 12007692.2
(22) Anmeldetag: 14.11.2012
(51) Int. Cl.: A01G 9/14

(54) **Gewächshaustisch sowie Verfahren zur Pflanzenaufzucht in einem Gewächshaus mit entsprechendem Gewächshaustisch**
Greenhouse table and method for producing plants in a greenhouse comprising a corresponding greenhouse table
Table de serre ainsi que le procédé de production des plantes dans une serre comprennant une telle table

(30) Priorität: 30.11.2011 DE 102011119736
(43) Veröffentlichungstag der Anmeldung: 05.06.2013
(73) Patentinhaber: Forschungszentrum Jülich GmbH, 52425 Jülich (DE)
(72) Erfinder: Gilmer, Frank, 67063 Ludwigshafen (DE); Max, Johannes, 52428 Jülich (DE); Scharr, Hanno, 52428 Jülich (DE)

(56) Entgegenhaltungen:
- EP-A1- 1 308 082
- EP-A1- 1 637 033
- EP-A1- 1 733 614
- NL-C2- 1 027 513

## Beschreibung

Die Erfindung betrifft einen Gewächshaustisch sowie ein Verfahren zur Herstellung einer seitlichen Zugänglichkeit von Pflanzreihen im Gewächshaus, Klimakammern, Laboren oder anderen Stellorten an denen Pflanzenproduktionen oder Untersuchungen von Pflanzen durchgeführt werden.

### Stand der Technik

Aus dem Stand der Technik sind Gewächshaustische/Pflanztische für Gartenbaubetriebe bekannt, bei denen innerhalb des Tischgestells ein Transportwagen angeordnet ist, der in Längsrichtung des Tischgestells und quer zur Längsrichtung der Pflanztische diese Pflanztische an den gewünschten Aufstellort verschieben kann.

Nachteilig bei den nach dem Stand der Technik bekannten Vorrichtungen ist es, dass diese Vorrichtungen ein Tischgestell mit einem Stützrahmen aufweisen, der einen seitlichen Zugang zu jeder einzelnen Pflanze/Pflanzreihe verhindert.

Die Schrift DE 40 22 039 C2 offenbart einen Pflanztisch für Gartenbaubetriebe bei dem Pflanztröge mittels eines Schienensystems mit Rollen auf einem Traggestell verschoben werden können.

### Aufgabe und Lösung

Es ist daher die Aufgabe der Erfindung, einen Gewächshaustisch für Pflanzen im Gewächshaus, Klimakammern, Laboren oder anderen Stellorten, an denen Pflanzenproduktionen oder Untersuchungen von Pflanzen durchgeführt werden, sowie ein Verfahren bereitzustellen, bei dem einzelne Tischelemente eines Gewächshaustisches jeweils seitlich zugänglich sind und zusätzlich frei beweglich innerhalb beispielsweise eines Gewächshauses verschoben werden können. Es ist weiterhin Aufgabe der Erfindung, einen Gewächshaustisch bereitzustellen, mit dem eine Kompression von Pflanzen zu einer optimierten Stelldichte sowie eine Dekompression von Pflanzen zur besseren Zugänglichkeit möglich werden.

Unter der Bezeichnung Gewächshaustisch ist im Rahmen der Erfindung ein Gewächshaustisch zu verstehen, der sich nahezu über die gesamte Nutzfläche eines Gewächshauses, von Klimakammern, Laboren oder anderen Stellorten, an denen Pflanzenproduktionen oder Untersuchungen von Pflanzen durchgeführt werden, erstrecken kann und aus mindestens zwei Teilelementen besteht, auf denen die jeweiligen Pflanzreihen aus Pflanztöpfen und/oder Pflanztrögen aufgestellt sind.

Diese Aufgaben werden erfindungsgemäß gelöst durch eine Vorrichtung gemäß Hauptanspruch sowie durch ein Verfahren gemäß Nebenanspruch. Weitere vorteilhafte Ausgestaltungen ergeben sich jeweils aus den darauf rückbezogenen Unteransprüchen.

Die Erfindung umfasst einen Gewächshaustisch umfassend mindestens zwei bewegliche Tischelemente zur Kompression bzw. Dekompression von Pflanzenbeständen, mit der eine optimierte Stelldichte sowie eine beidseitige Zugänglichkeit zu den Pflanzenreihen auf den jeweiligen Tischelementen möglich wird. Durch den erfindungsgemäßen Gewächshaustisch wird es weiterhin möglich, einzelne Tischelemente mit den jeweils darauf angeordneten Pflanzreihen automatisiert mittels Sensorsysteme zu überwachen oder auch mittels automatisierter Maschinen Pflanzen/Pflanzenteile gezielt zu ernten und so eine gegenüber dem Stand der Technik verbesserte, schnellere und wirtschaftlichere Überwachung und Nutzung der jeweiligen Pflanzen zu erreichen.

Der Gewächshaustisch ist daher aus mindestens zwei unabhängig voneinander beweglichen Tischelementen zusammengesetzt. Diese Tischelemente sind seitlich, quer zu ihrer Längsachse verschiebbar, so dass zwischen den einzelnen Tischelementen entlang ihrer Längsseite mindestens ein Freiraum entsteht. Im Rahmen der Erfindung wird unter der Bezeichnung Tischelement der Stellplatz für mindestens eine, vorzugsweise zwei bis mehrere Pflanzreihen verstanden. Unter der Bezeichnung Pflanzreihe wird eine beliebige Anzahl an Pflanztöpfen und/oder Pflanztrögen verstanden, die auf dem jeweiligen Tischelement angeordnet sein können.

Die Tischelemente weisen eine Länge von mehreren Metern auf, die vorzugsweise der Breite des jeweils zu Verfügung stehenden Gewächshauses entspricht. Jedes Tischelement weist beispielsweise eine Breite von 0,5 bis 1 Meter auf. Die maximale Anzahl der Tischelemente pro Gewächshaus entspricht der Gesamtlänge des Gewächshauses / Breite eines Tischelements - 1-fache gewünschte mittlere Breite des Freiraums, wobei alle Tischelemente vorzugsweise dieselbe Breite aufweisen. In einer besonders vorteilhaften Ausführung der Erfindung entspricht die maximale Anzahl der Tischelemente pro Gewächshaus der Gesamtlänge des Gewächshauses / Breite eines Tischelements - 2-fache gewünschte mittlere Breite des Freiraums, wobei hier ebenfalls alle Tischelemente vorzugsweise dieselbe Breite aufweisen.

Die Tischelemente verfügen über wenigstens ein Stützelement unterhalb der Tischfläche/Stellfläche, welches über eine Transporthilfe, wie beispielsweise Rollen, beweglich auf einer Transportschiene gelagert ist. Diese Transportschiene ist ebenfalls unterhalb der Tischfläche angeordnet. Als Stützelement des Tischelements sind beispielsweise eine Stützfuß oder 2 bis 4 Stützbeine möglich, die jeweils mit Transporthilfen, wie beispielsweise Rollen ausgestattet sind. Je nach Anzahl der Stützelemente können auch mehrere Transportschienen angeordnet sein. So ist in einer vorteilhaften Ausgestaltung des Gewächshauses, bei dem die Tischelemente ein Stützelement aus beispielsweise zwei parallel zur Querrichtung des Tischelements angeordnete Stützbeinpaaren aufweist, zwei parallel zu Querachse der Tischelemente ausgerichtete Transportschienen angeordnet, in die die Stützbeine des/der Tischelements/e eingesetzt sind.

Die seitliche Verschiebung der Tischelemente kann über Antriebsmittel erfolgen. Diese können manuelle oder vollautomatische mechanische, elektrische, pneumatisch- oder hydraulisch- motorische Antriebsmittel sein, deren Geschwindigkeit einstellbar und steuerbar ist.

Innerhalb des Gewächshaustisches befindet sich mindestens ein Freiraum zwischen zwei benachbarten Tischelementen. Durch diesen Freiraum wird eine vollständige seitliche Zugänglichkeit zu jeweils einer Längsseite der Tischelemente möglich, die zuvor durch die zusammen geschobenen Tischelemente nicht zugänglich war. Dieser Freiraum kann in einer vorteilhaften Ausführung der Erfindung die Breite von einem Tischelement aufweisen und dabei beispielsweise etwa eine Breite von 0,3 bis 1,0 m Meter aufweisen.

In einer weiteren vorteilhaften Ausführung der Erfindung befinden sich innerhalb des Gewächshaustisches mindestens zwei Freiräume.

Durch Bildung zweier Freiräume links und rechts entlang der gesamten Längsseite eines Tischelements ist ein beidseitiger Zugang zu dem jeweiligen Tischelement und damit zu den Pflanzenreihen möglich. Durch diesen beidseitigen Zugang kann sowohl eine vereinfachte Bearbeitung/Versorgung der Pflanzen durch beispielsweise das betreuende Personal erreicht werden. Darüber hinaus kann durch diese vorteilhafte beidseitige Zugänglichkeit der Tischelemente eine beidseitige Zugänglichkeit der Pflanzreihen durch Sensorsysteme und/oder Erntesysteme erreicht werden. Weiterhin wird durch die Bildung zweier Freiräume links und rechts entlang der gesamten Längsseite eines Tischelements zusätzlich eine einseitige seitliche Zugänglichkeit zu den Längsseiten der jeweils benachbarten Tischelemente möglich. In einer weiteren vorteilhaften Ausgestaltung der Erfindung befinden sich innerhalb des Gewächshaustisches auch mehr als zwei Freiräume. Dies kann beispielsweise dann von Vorteil sein, wenn an mehreren Tischelementen gleichzeitig eine Betreuung durch Personal und/oder parallele sensorische Messungen/ parallele Erntevorgänge erforderlich sind.

Durch die Freiräume sind die jeweiligen Tischelemente von mindestens einer Längsseite her zugänglich, so dass beispielsweise die Pflanzreihen jeweils in der Breite eines Tischelements lokal dekomprimiert werden können und an der/den Pflanzenreihe/n der Tischelemente ein einseitiger oder bevorzugt beidseitiger seitlicher Zugang für beispielsweise sensorische Vorrichtungen oder auch Erntevorrichtungen geschaffen werden kann. Durch den seitlichen Zugang zu den Tischelementen ist es weiterhin möglich eine Kompression der Pflanzreihen zu ermöglichen, um eine höhere Stelldichte zu erreichen. Die Dekompression und/oder Kompression der Pflanzenreihen kann entweder manuell oder auch automatisiert erfolgen.

Der Gewächshaustisch mit den Tischelementen kann in einer vorteilhaften Ausführung weitere für die Kultivierung der jeweiligen Pflanze automatisierte Sensor-, Ernte- und/oder Versorgungssysteme aufweisen wie beispielsweise Laserlichtquellen mit Laserdetektoren zur Phänotypisierung von Pflanzen, Hyperspektralsensoren, Stereokameras zu Erfassung des Wachstums von Pflanzen, Schneidevorrichtungen oder zusätzliche Verteilersystemen für beispielsweise Fungizide und/oder Herbizide. Die vorgenannten verschiedenen Sensor-, Ernte- und/oder Versorgungssysteme werden im Folgenden auch unter der Bezeichnung "Systeme" zusammengefasst. Diese Systeme können in Längsrichtung an den jeweiligen Tischelementen vorbeigeführt werden. Dazu sind die jeweiligen Systeme beispielsweise oberhalb der Tischelemente so an einem Querbalken angeordnet, dass die Belichtung der Pflanzreihen nicht beeinträchtigt wird. Dieser Querbalken kann in einer vorteilhaften Ausführung der Erfindung entlang der Längsrichtung der Tischelemente jeweils entlangfahren und die zuvor genannten Systeme einseitig, besonders bevorzugt beidseitig, an den jeweils seitlich zugänglichen Pflanzreihen auf den Tischelementen entlangführen.

### Spezieller Beschreibungsteil

Nachfolgend wird der Gegenstand der Erfindung anhand von Figuren erläutert, ohne dass der Gegenstand der Erfindung hierdurch beschränkt wird.

Es ist gezeigt:
Fig. 1: halbseitige Ansicht des Gewächshaustisches mit mehreren verschiebbaren Tisch- elementen
Fig. 2: Aufsicht auf Gewächshaustisch mit verschiebbaren Tischelementen und Versorgungssystem sowie Sensorsystem
Fig.3: halbseitige Ansicht eines verschiebbaren Tischelements mit Sensorsystem
Fig. 4: halbseitige Ansicht mehrerer Tischelemente mit beidseitig ausgeführtem Sensorsystem

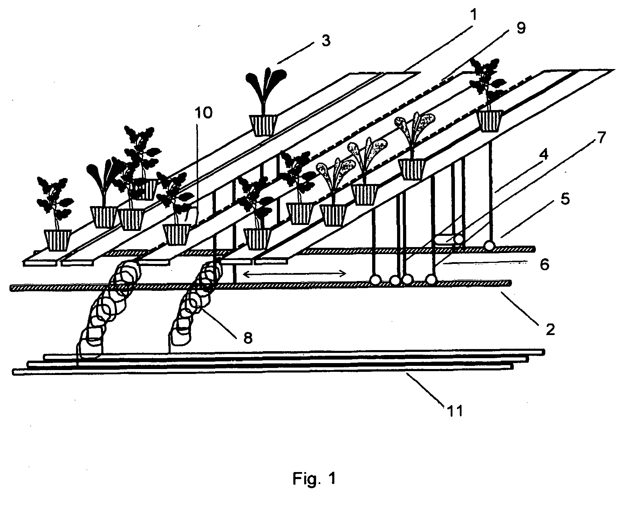

Figur 1 zeigt in halbseitiger Ansicht ein Ausführungsbeispiel des erfindungsgemäßen Gewächshaustisches. Die einzelnen Tischelemente (1), mit den Pflanztöpfen (3) sind auf zwei Transportschienen (2) angeordnet. Jedes Tischelement (1) weist 4 Stützelemente (4) mit jeweils 4 Transportrollen (5) auf, wodurch die Tischelemente (1) seitlich auf den beiden Transportschienen (2) beweglich angeordnet sind. An den Stützelementen (4) der Tischelemente (1) ist über Querstreben (6) ein Motor (7) angebracht, der für die seitliche Bewegung der einzelnen Tischelemente (1) auf den Transportschienen (2) sorgt. Jedes Tischelement (1) kann einzeln bewegt und einzeln gesteuert positioniert werden. Die Tischelemente (1) können mit Hydraulikzylindern ausgestattet sein, mit welchen sie sich aneinander positionieren können. An die Tischelemente (1) sind Schläuche (8) angeschlossen, die sich in Form von Versorgungsschläuchen (9) entlang der gesamten Längsseite des Tischelements (1) erstrecken. Aus diesen Schläuchen (8) kann über eine einzelne Schlauchabzweigung (10) auch eine Einzelversorgung eines Pflanztopfs (3) erfolgen. Die Schläuche (8) sind an Zuleitungen (11), die beispielsweise Nährstoffe, Wasser und/oder bodensystemische Wirkstoffe enthalten, angeschlossen. Es können auch mehrere Schläuche (8) und Versorgungsschläuche (9) an die jeweiligen Tischelemente angeschlossen sein, die dann die Pflanzen beispielsweise mit unterschiedlichen Fertigationslösungen versorgen, die an die jeweiligen Bedingungen der Pflanzen angepasst sind.

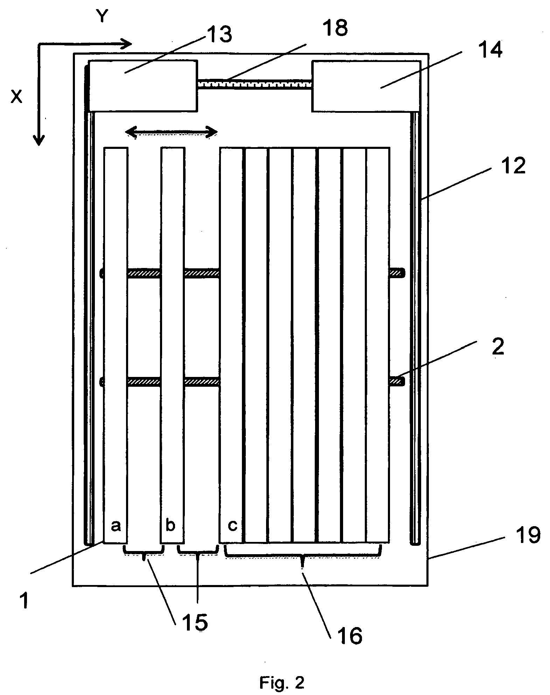

Figur 2 zeigt eine Aufsicht auf den erfindungsgemäßen Gewächshaustisch. Die einzelnen Tischelemente (1) sind entlang der Transportschienen (2) seitlich beweglich. In der oberen linken Ecke der Figur ist eine XY-Koordinatenachse eingezeichnet, welche die Richtungen verdeutlichen soll, in denen die einzelnen Vorrichtungselemente verschoben werden können. Die Tischelemente (1) sind gemäß dieser Koordinatenachse in Y-Richtung seitlich verschiebbar. Die Tischelemente (1) können entweder jeweils einzeln oder auch gleichzeitig in Gruppen von mehreren Tischen verschoben werden. Dazu können entsprechende technische Antriebsmittel wie beispielsweise einzelne Motoren oder motorgetriebene Kettensysteme eingesetzt werden. Die Tischelemente (1) werden von Führungsschienen (12) umgeben. In diesen Führungsschienen (12) ist ein verschiebbares Sensor- (13) und/oder Versorgungssystem (14) angeordnet, welches beispielsweise im Falle des Sensorsystems ein Lichtsensorsystem, Hyperspektralsensoren oder Stereokameras sein können und im Falle des Versorgungssystems (14) eine zusätzliche Beleuchtungseinheit, eine Sprühvorrichtung für Herbizide und/oder Fungizide, eine Beregnungs-/Befeuchtungsanlage oder eine Begasungsanlage zur CO₂-Anreicherung umfassen kann. Sensorsystem (13) und Versorgungssystem (14) befinden sich in dieser Darstellung im seitlichen Bereich außerhalb der Tischelemente (1), in der sogenannten Parkposition, in der es zu keiner Beeinträchtigung der Beleuchtung der Pflanzen durch eine Abschattung durch das Sensorsystem (13) kommen kann. Sensorsystem (13) und Versorgungssystem (14) sind auf einem Querbalken (18) befestigt. Der gesamte Querbalken (18) ist in X-Richtung auf den Führungsschienen (12) beweglich angeordnet. Das Sensorsystem (13) und die Versorgungssystem (14) können jedoch auch entlang des Querbalkens (18) seitlich in Y-Richtung seitlich bewegt werden. Zwischen den Tischelementen (1), die entlang der Transportschienen (2) seitlich in Y-Richtung auseinandergezogen sind, befindet sich jeweils ein Freiraum (15), der einen seitlichen Zugang zu diesen einzelnen Tischelementen (1) ermöglicht. Zwischen den zusammengeschobenen Tischelemente (1) befinden sich keine Freiräume (16). So ist beispielsweise Tischelement (1 b) von beiden Seiten zugänglich, während die Tischelemente (1a) und (1c) in dieser Darstellung nur von einer Seite zugänglich sind. Um einen Zugang für das betreuende Personal des Gewächshauses zu ermöglichen sollte der Freiraum (15) eine Breite von 0,5 bis 0,6 m aufweisen. Sollen die Freiräume (15) einen beidseitigen Zugang für die Sensor-, Erntesysteme und/oder Versorgungssysteme ermöglichen, so ist ein Freiraum (15) von jeweils 0,3 m ausreichend.

Der in der Figur 2 dargestellte Rahmen (19), der alle Vorrichtungselemente umschließt, stellt das Gewächshaus dar. Die X-Achse entspricht in dieser Darstellung der Gewächshausbreite und die Y-Achse der Gewächshauslänge. In Figur 2 ist daher zu erkennen, daß in dieser vorteilhaften Ausführung die maximale Anzahl der Tischelemente (1) pro Gewächshaus der Gesamtlänge des Gewächshauses / Breite eines Tischelements - 2-fache gewünschte mittlere Breite des Freiraums (15) entsprechen sollte, wobei alle Tischelemente (1) vorzugsweise dieselbe Breite aufweisen. Die Länge der Tischelemente (1) sollte dabei vorzugsweise nahezu die Gewächshausbreite aufweisen, wobei rechts und/oder links von den Tischelementen (1) an den Längsseiten des Gewächshauses ein Zugang freigelassen werden sollte.

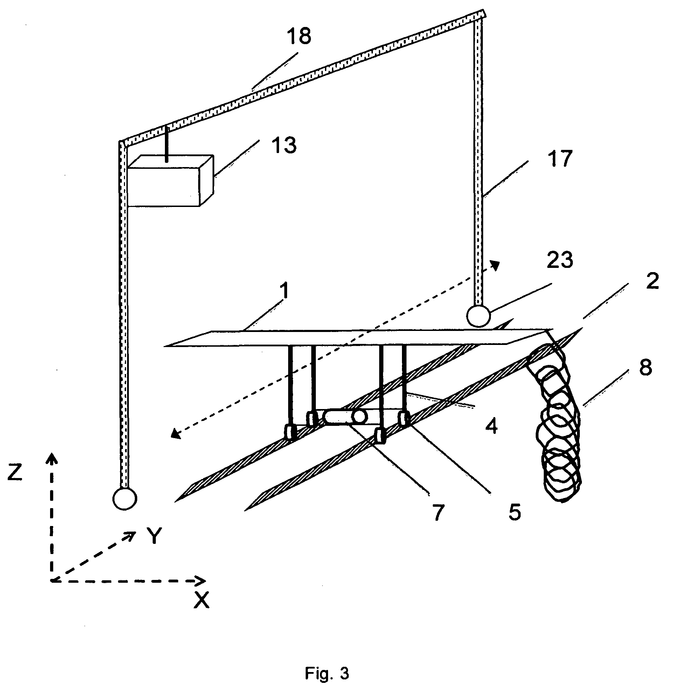

Figur 3 zeigt ein einzelnes Tischelement (1) welches auf Transportschienen (2) angeordnet ist mit verschiebbarem Sensorsystem (13). In der unteren linken Ecke der Darstellung ist ein XYZ-Koordinatensystem dargestellt, welches die Richtungen, in die die einzelnen Vorrichtungselemente verschoben werden können, verdeutlichen soll.

Das Tischelement (1) kann, angetrieben durch einen Motor (7), auf den Transportrollen (5) entlang der Transportschienen (2) seitlich in Y-Richtung verschoben werden. Die Tischelemente (1) sollten dabei ruckfrei bewegt werden, um ein Umfallen von Pflanztöpfen und/oder Pflanztrögen zu vermeiden. Die seitlich angebrachten Schläuche (8) können auf Grund ihrer Länge die Bewegung der Tischelemente (1) entlang der Transportschienen (2) komplett begleiten. In einer vorteilhaften Ausführung sind die Schläuche (8) als Spiralschläuche ausgebildet. Oberhalb des Tischelements (1) befindet sich ein Sensorsystem (13), welches an einem Querbalken (18) angeordnet ist. Dieser Querbalken (18) mit dem Sensorsystem (13) wird von zwei Pfeilern (17) getragen, die entlang des Tischelements (1) in X-Richtung mit Hilfe von Transportmitteln (23), wie beispielsweise Rollen, beweglich sind. Diese Transportmittel (23) können mit Hilfe von Führungsschienen (12), hier nicht dargestellt, entlang der Tischelemente (1) in X-Richtung bewegt werden. Der Querbalken (18) ist weiterhin entlang der vertikalen Pfeiler (17) in Z-Richtung verschiebbar, so daß das Sensorsystem (13) in unterschiedlicher Höhe über den Tischelementen (1) angeordnet sein kann. So kann das Sensorsystem (13) beispielsweise direkt über der Tischfläche des Tischelements (1) angeordnet sein oder sich mehrere Meter oberhalb des Tischelements (1) befinden. Der Querbalken (18) mit dem Sensorsystem, Erntesystem und/oder dem Versorgungssystem kann manuell oder automatisiert mit Hilfe von mechanischen, elektrischen, pneumatischen oder hydraulischen motorischen Antriebsmitteln, die vorzugsweise hinsichtlich Geschwindigkeit, Beschleunigung und Positionierung steuerbar sind, bewegt werden.

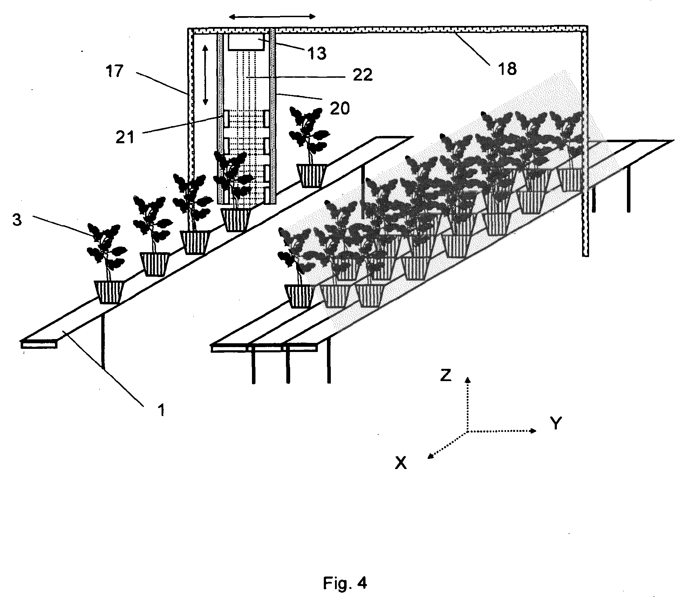

Figur 4 zeigt in halbseitiger Ansicht einen Ausschnitt des erfindungsgemäßen Gewächshaustisches mit beispielhaft vier Tischelementen (1). Zur besseren Darstellung wurden in dieser Figur die Transportschienen (2), die Antriebsmittel der Tischelemente (1) sowie die Führungsschienen (12) nicht mit aufgeführt. In der unteren rechten Ecke der Darstellung ist ein XYZ-Koordinatensystem dargestellt, welches die Richtungen, in die die einzelnen Vorrichtungselemente verschoben werden können, verdeutlichen soll.

Oberhalb der Tischelemente (1) ist ein Sensorsystem (13) angebracht, welches an einem Querbalken (18) angeordnet ist. Dieser Querbalken (18) wird, wie schon entsprechend in Figur 3 beschrieben, von zwei Pfeilern (17) getragen, die entlang der Tischelemente (1) in X-Richtung beweglich sind. In dieser Figur ist eine besonders bevorzugte Ausführung des Sensor-, Ernte- und/oder Versorgungssystems dargestellt. Bei dieser Ausführung sind an den Querbalken (18) zwei vertikal ausgerichtete Arme (20) angebracht. Hierbei ist nicht nur oben am Querbalken (18) ein entsprechendes System (13) angeordnet, sondern es sind auch seitlich, zur Innenseite in Richtung der Tischfläche des Tischelements (1), weitere Sensorsysteme (21) angebracht. Diese Systeme (13, 21) können mit Hilfe der Anordnung aus beweglichen Pfeilern (17) mit Querbalken (18) beidseitig entlang der Längsseite der Tischelemente (1) in X-Richtung bewegt werden. Des weiteren können die Systeme (13, 21) in Z-Richtung nach oben und unten verschoben werden (in der Figur durch den beidseitigen Pfeil neben dem Querbalken (17) bzw. Arm (20) angedeutet). Dies kann zum einen durch das Verschieben des Querbalkens (18) entlang der Pfeiler (17) in Z-Richtung und/oder auch durch Verschieben der Systeme (13, 21) in Z-Richtung entlang der Arme (20), die beispielsweise als Schienen ausgestaltet sein können, in die die Systeme (13, 21) eingehängt sind, erfolgen. Diese Überwachungs-, Ernte- und/oder Versorgungssysteme können manuell oder automatisiert mit Hilfe von mechanischen, elektrischen, pneumatischen oder hydraulisch motorischen Antriebsmitteln bewegt und gesteuert werden.

Mit dieser Ausführung kann jede Pflanze/Pflanzreihe sowohl beidseitig, d.h. gleichzeitig entlang der beiden jeweiligen Längsseiten eines Tischelements (1) mit den zusätzlichen Systemen (21), die an den Armen (20) angeordnet sind und sowohl das gleiche als auch ein unterschiedliches Sensorsystem gegenüber dem System (13) aufweisen können, als auch von oben mit Hilfe des oberhalb angebrachten Systems (13) behandelt und analysiert werden. Um ein Erfassung der Pflanzenhöhe, des umhüllenden Volumens einer Pflanze, der Blattfläche oder auch der Blattfarbe durchzuführen, kann so mittels System (13) und (21) beispielsweise über Laserquellen und Laserdetektoren ein Lichtgitter (22) erzeugt werden, mit dem die Pflanze sowohl von beiden Seiten als auch von oben erfaßt werden kann. Weiterhin ist mit dieser vorteilhaften Ausführung eine automatisierte Probenahme, von beispielsweise einzelnen Blättern einer Pflanzen mit den jeweils gewünschten Eigenschaften oder auch ein automatisiertes Ernten oder Beschneiden möglich, bei dem ein Sensor die Reife einer Frucht oder das Wachstum der Pflanze detektiert und daran gekoppelt ein Erntesystem oder eine Schnittmaschine an den gewünschten Bereichen das Ernten bzw. Beschneiden vornimmt. Diese vorteilhafte beidseitige Zugänglichkeit zu den einzelnen Tischelementen ermöglicht erstmals eine gleichzeitige beidseitige Behandlung und Analyse der Pflanzen sowohl von beiden Seiten des Tischelements als auch von oben.

Damit diese vorteilhafte Behandlung und Analyse erfolgen kann, muß jedes einzelne Tischelement jedoch von den übrigen Tischelementen (1) räumlich so weit entfernt sein bzw. verschoben werden, dass jeweils entlang der Längsseite des Tischelements (1) ein Freiraum (15) gebildet wird, der die Arme (20) ungehindert entlang des Tischelements (1) in X-Richtung passieren läßt. Für diese Ausgestaltung ist ein Freiraum von beispielsweise 0,3 m ausreichend.

Um die nächste Pflanzreihe entsprechend zu untersuchen und zu behandeln, wird das entsprechende Tischelement (1) wie zuvor beschrieben, seitlich verschoben und die Systeme (13, 21) entlang des Querbalkens (18) in Y-Richtung entsprechend bewegt, so dass die Systeme (13, 21) in X-Richtung entlang des nächsten Tischelements (1) bewegt werden können.

## Patentansprüche

1. Gewächshaustisch bei dem einzelne Pflanzreihen seitlich zugänglich sind, umfassend mindestens zwei Tischelemente (1), wobei die Tischelemente (1) seitlich quer zu ihrer Längsachse entlang mindestens einer Transportschiene (2) beweglich angeordnet sind,
**dadurch gekennzeichnet, dass**
die Tischelemente (1) mit Schläuchen (8) ausgestattet sind, an die Versorgungsschläuche (9) angeschlossen sind, die sich entlang der gesamten Längsseite des Tischelements (1) erstrecken.

2. Gewächshaustisch nach Anspruch 1,
**dadurch gekennzeichnet, dass**
die Tischelemente (1) unterhalb ihrer Tischfläche über mindestens ein Stützelement (4) verfügen, das beweglich auf der Transportschiene (2) angeordnet ist, die sich ebenfalls unterhalb des Tischelements (1) befindet.

3. Gewächshaustisch nach einem der Ansprüche 1 bis 2,
**dadurch gekennzeichnet, dass**
die Tischelemente (1) jeweils mit mechanischen, elektrischen, pneumatischen und/oder hydraulisch motorischen Antriebsmitteln ausgestattet sind.

4. Gewächshaustisch nach einem der Ansprüche 1 bis 3,
**dadurch gekennzeichnet, dass**
sich zwischen den Tischelementen (1) mindestens ein Freiraum (15) befindet, der sich entlang der kompletten Längsseite der Tischelemente (1) erstreckt.

5. Gewächshaustisch nach einem der Ansprüche 1 bis 4,
**dadurch gekennzeichnet, dass**
die Schläuche (8) an Zuleitungen (11) angeschlossen sind.

6. Gewächshaustisch nach einem der Ansprüche 1 bis 5,
**dadurch gekennzeichnet, dass**
der Gewächshaustisch ein mobiles Überwachungs-, Ernte- und/oder Versorgungssystem aufweist.

7. Gewächshaustisch nach Anspruch 6,
**dadurch gekennzeichnet, dass**
das mobile Überwachungs-, Ernte- und/oder Versorgungssystem oberhalb der Tischelemente (1) an einem Querbalken (18) angeordnet ist, der von Pfeilern (17) getragen wird, bei dem diese Pfeiler (17) sowohl entlang der Längsseite der Tischelemente (1) verschiebbar sind, als auch der Querbalken (18) in vertikaler Richtung nach oben und unten entlang der Pfeiler (17) verschiebbar ist.

8. Gewächshaustisch nach einem der Ansprüche 6 bis 7,
**dadurch gekennzeichnet, dass**
das mobile Überwachungs-, Ernte- und/oder Versorgungssystem in vertikaler Richtung entlang zweier Arme (20), die am Querbalken (18) angebracht sind, nach oben oder unten verschiebbar ist.

9. Gewächshaustisch nach vorhergehendem Anspruch,
**dadurch gekennzeichnet, dass**
das mobile Überwachungs-, Ernte- und/oder Versorgungssystem manuell oder automatisiert mit Hilfe von mechanischen, elektrischen, pneumatischen oder hydraulisch motorischen Antriebsmitteln verschiebbar ist.

## Claims

1. Greenhouse table in which individual rows of plants are arranged so that they are accessible from the side, comprising at least two table elements (1), in which the table elements (1) are arranged sideways so that they may move crosswise to their longitudinal axis along at least one transport rail (2),
**characterised in that**
the table elements (1) are fitted with hoses (8), to which supply hoses (9) are connected, which extend along the whole of the long side of the table element (1).

2. Greenhouse table according to claim 1,
**characterised in that**
the table elements (1) have at least one support element (4) underneath their table surface, which is arranged so that it may move on the transport rail (2), which is also underneath the table element (1).

3. Greenhouse table according to one of claims 1 to 2,
**characterised in that**
the table elements (1) may be fitted with mechanical, electrical, pneumatic and/or hydraulic motorised means of driving.

4. Greenhouse table according to one of claims 1 to 3,
**characterised in that**
there is at least one open space (15) between the table elements (1), which extends along the whole of the long side of the table elements (1).

5. Greenhouse table according to one of claims 1 to 4,
**characterised in that**
the hoses (8) are connected to supply lines (11).

6. Greenhouse table according to claims 1 to 5,
**characterised in that**
the greenhouse table has a mobile monitoring, harvesting and/or care system.

7. Greenhouse table according to claim 6,
**characterised in that**
the mobile monitoring, harvesting and/or care system is arranged above the table elements (1) on a crossbar (18), which is carried by pillars (17), in which these pillars (17) may be moved along the long side of the table elements (1) and the crossbar (18) may be moved up and down in a vertical direction along the pillars (17).

8. Greenhouse table according to one of claims 6 to 7,
**characterised in that**
the mobile monitoring, harvesting and/or care system may be moved up or down in a vertical direction along two arms (20), which are attached to the crossbar (18).

9. Greenhouse table according to the previous claim,
**characterised in that**
the mobile monitoring, harvesting and/or care system may be moved manually or automatically with the help of mechanical, electrical, pneumatic or hydraulic motorised means of driving.

## Revendications

1. Table de serre, selon laquelle diverses rangées de plantes sont accessibles sur le côté, comprenant au moins deux éléments de table (1), dans laquelle les éléments de table (1) sont disposés de manière mobile latéralement de manière transversale par rapport à leur axe longitudinal, le long au moins d'un rail de transport (2),
**caractérisée en ce**
**que** les éléments de table (1) sont équipés de tuyaux flexibles (8), auxquels sont raccordés des tuyaux flexibles d'alimentation (9), qui s'étendent le long de l'ensemble du côté longitudinal de l'élément de table (1).

2. Table de serre selon la revendication 1, **caractérisée en ce**
**que** les éléments de table (1) disposent sous leur surface de table d'au moins un élément d'appui (4), qui est disposé de manière mobile sur le rail de transport (2), qui se trouve également sous l'élément de table (1).

3. Table de serre selon l'une quelconque des revendications 1 à 2,
**caractérisée en ce**
**que** les éléments de table (1) sont équipés respectivement de moyens d'entraînement mécaniques, électriques, pneumatiques et/ou motorisés de manière hydraulique.

4. Table de serre selon l'une quelconque des revendications 1 à 3,
**caractérisée en ce**
**qu'**au moins un espace dégagé (15) se trouve entre les éléments de table (1), lequel s'étend le long de la totalité du côté longitudinal des éléments de table (1).

5. Table de serre selon l'une quelconque des revendications 1 à 4,
**caractérisée en ce**
**que** les tuyaux flexibles (8) sont raccordés à des conduits d'arrivée (11).

6. Table de serre selon l'une quelconque des revendications 1 à 5,
**caractérisée en ce**
**que** la table de serre présente un système mobile de surveillance, de récolte et/ou d'alimentation.

7. Table de serre selon la revendication 6, **caractérisée en ce**
**que** le système mobile de surveillance, de récolte et/ou d'alimentation est disposé, au-dessus des éléments de table (1), au niveau d'une poutre transversale (18), qui est supportée par des piliers (17), selon laquelle lesdits piliers (17) peuvent être déplacés par coulissement d'une part le long du côté longitudinal des éléments de table (1) et d'autre part la poutre transversale (18) peut être déplacée par coulissement dans une direction verticale vers le haut et vers le bas le long des piliers (17).

8. Table de serre selon l'une quelconque des revendications 6 à 7,
**caractérisée en ce**
**que** le système mobile de surveillance, de récolte et/ou d'alimentation peut être déplacé par coulissement vers le haut ou vers le bas dans une direction verticale le long de deux bras (20), qui sont installés au niveau de la poutre transversale (18).

9. Table de serre selon la revendication précédente,
**caractérisée en ce**
**que** le système mobile de surveillance, de récolte et/ou d'alimentation peut être déplacé par coulissement manuellement ou de manière automatisée à l'aide de moyens d'entraînement mécaniques, électriques, pneumatiques ou motorisés de manière hydraulique.
